# EUROPEAN PATENT APPLICATION

(11) **EP 1 596 381 A2**
(43) Date of publication of application: **16.11.2005**
(21) Application number: 05252862.7
(22) Date of filing: 10.05.2005
(51) Int. Cl.: G11B 7/125

(54) **Optical information recording device**

(30) Priority: 13.05.2004 JP 2004143565
(71) Applicant: TAIYO YUDEN CO., LTD., Tokyo 110-0005 (JP)
(72) Inventor: Sekiguchi, Mitsuo Taiyo Yuden Co., Ltd., Tokyo 110-0005 (JP); Kakimoto, Hiroya Taiyo Yuden co., Ltd., Tokyo 110-0005 (JP); Matsuda, Isao Taiyo yuden Co., Ltd., Tokyo 110-0005 (JP); Sato, Yoshikazu Taiyo yuden Co., Ltd., Tokyo 110-0005 (JP)
(74) Representative: Jackson, Richard Eric

(57) **Abstract**

An optical information recording device is suitable for detection of deviation between a strategy and a record pattern. Test record is performed on an optical recordable medium using a predetermined strategy. A binarization signal that is obtained by reproducing the test record result is counted. A pit length and a land length included in the binarization signal are specified using a histogram of the count result. A plurality of the reproduction patterns is searched and extracted from a record area based on the pit length and the land length. Deviation between a strategy and a record pattern formed by the test record is detected through comparison of the obtained reproduction patterns through the search.

## Description

### BACKGROUND OF THE INVENTION

### 1. Field of the Invention

The present invention relates to an optical information recording device, and more particularly, to an optical information recording device, which is effective in correcting phase deviation or length deviation of recording pits.

### 2. Description of the Related Art

Recording information on an optical information record medium such as an optical disk is carried out in such a manner that record data are modulated in accordance with the EFM (Eight to Fourteen Modulation) mode, a recording pulse is formed according to the modulation signal, and recording pits are then formed on the optical disk through control of the intensity or irradiation timing of laser light based on the recording pulse.

In this case, since the recording pits are formed using heat generated by irradiation of laser light, it is required that the recording pulse be set by taking the effects of thermal storage, thermal interference, etc. into consideration. Accordingly, in the prior art, the setting of various parameters constituting the recording pulse is defined in plural in the form called strategy depending upon the type of an optical disk, an optimal strategy that is best suitable for corresponding record environment is selected from the strategies, and is executed in a strategy circuit installed in the optical information recording device.

The strategy executed by the strategy circuit is dependent upon the type of a manufacture and the record speed of an optical disk used for record reproduction, as well as individual device difference between optical information recording devices, deviation in the spot diameter of pick-up, deviation in equipment exactness, and the like. Therefore setting the optimal strategy is to improve recording quality.

For this reason, in the recording method of information on the optical disk, wherein an optimal strategy of an optical disk, which corresponds to each maker type, is found and the optimal strategy is previously stored in the memory corresponding to the maker type, techniques in which the maker type of the optical disk, which is recorded on the optical disk, is read, and the optimal strategy corresponding to the read maker type is read from the memory, and is then set in the strategy circuit was proposed.

In this technique, however, optimal record can be performed only on an optical disk of a maker type that has been previously stored in the memory. It is, however, impossible to perform optimal record on an optical disk of a maker type that has not been stored in the memory. Furthermore, although an optical disk is an optical disk of a maker type that has been previously stored in the memory, optimal record cannot be performed if the optical disk has a different record speed.

Accordingly, as disclosed in the following Patent Documents (Japanese Unexamined Patent Application Publication No. 1993-144001 and Japanese Unexamined Patent Application Publication No. 1992-137224), techniques in which test record is previously performed on a record condition basis, and an optimal strategy is determined according to the test record in such a way to be capable of coping with a variety of optical disks were proposed.

In the technologies disclosed in the above-described Patent Documents, it is impossible to determine to what degree it is necessary to control parameters with regard to the parameter setting of plural strategies. For this reason, it is impossible to set an optimal strategy corresponding to the various parameters.

In other words, the parameters for setting the strategy can include:
1) Front phase correction of a recording pulse
2) Rear phase correction of a recording pulse
3) Thermal interference correction
4) Correction of the length of a record mark, etc. The amount of deviation is corrected by controlling the record power of a laser beam, a pulse width of a recording pulse, and the like. In the techniques disclosed in the Patent Documents, however, it is impossible to determine the amount of deviation in an independent manner. This makes it impossible to decide an optimal strategy corresponding to various setting parameters.

An effective method for solving the above problems is disclosed in Japanese Unexamined Patent Application Publication No. 2003-30837. Paragraph 0020 of this Patent Document reads '···phase error with a channel clock is detected on a record pattern basis. The record compensation parameter controller 12 serves to optimize the emission waveform rule based on detection results in the phase error detection part 11. ···'. This patent discloses techniques in which phase error is detected and corrected through comparison with the channel clock.

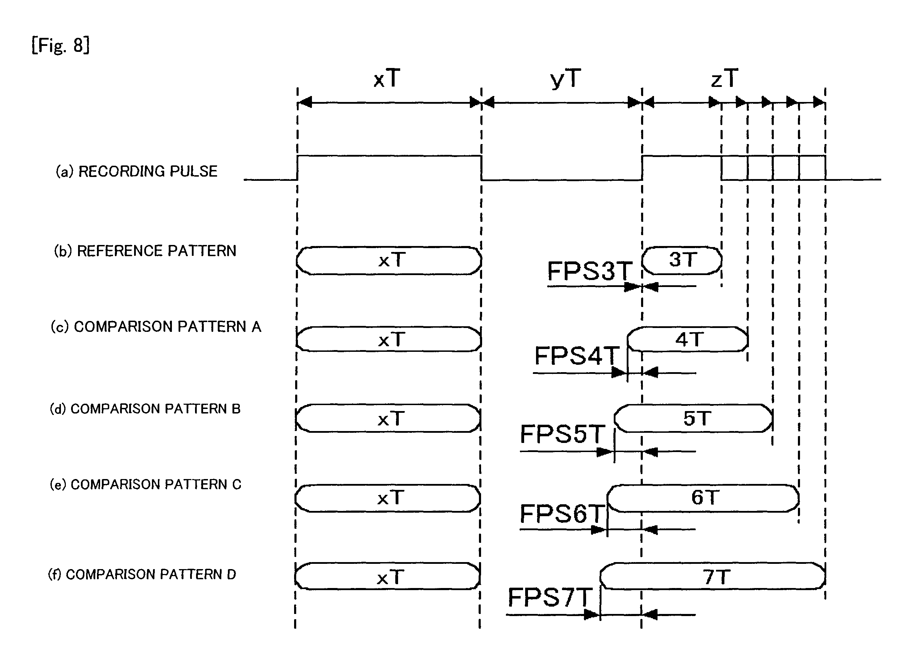

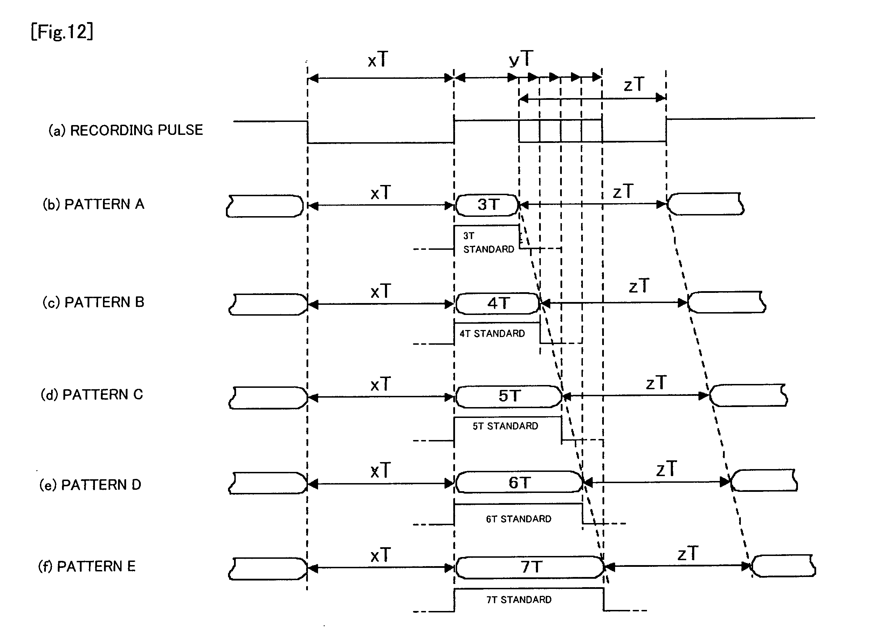

Further, Paragraph 0024 of the above Patent Document reads 'Thereafter, a test pattern for deciding the emission waveform rule is recorded. An area in which the test pattern is recoded is thus reproduced in order to examine the relation between a predetermined emission waveform rule and the amount of phase error. In other words, the amount of phase error is measured in each combination of the length of various marks and the length of various spaces immediately before the marks. A desired emission waveform rule is determined by estimating the emission waveform rule in which the amount of phase error becomes zero based on the measured amount of phase error. ···'. As described above, this patent document discloses techniques in which the amount of phase error in each combination of the marks and the spaces is measured, and an emission waveform rule in which the amount of phase error becomes zero is estimated (see Figs. 8 and 12).

In accordance with the techniques disclosed in this Patent Document, since correction is performed based on phase error of record patterns, it is possible to set optimal strategies corresponding to various setting parameters. Since the phase error is detected through comparison with a channel clock, however, there is a possibility that determination of the length of marks or detection of deviation itself can be difficult if deviation between an actually recorded pit and a prescribed strategy is too great.

### SUMMARY OF THE INVENTION

Accordingly, the present invention provides techniques, which are effective in detecting deviation between a recording pit and a strategy in consideration of the setting of various parameters.

In order to achieve the above-mentioned object, according to first aspect of the present invention, an optical information recording device for recording information on an optical recordable medium through pulse irradiation of laser light, including means that performs test record on the optical recordable medium using a predetermined strategy, compares with a first reproduction pattern and a second reproduction pattern, which are obtained by reproducing the test record result, and detects deviation between the strategy and a record pattern formed by the test record.

In this case, the strategy is one in which a pulse condition of laser light, which is set to obtain a desired pit shape, is defined. A specific pulse shape is provided in consideration of the length of a pit becoming an object of record, the relation with the length of a land immediately before, the relation with the length of a subsequent land, the influence of thermal storage or thermal interference, and so on, with respect to variation in irradiation power or a pulse width of laser light.

Test record is performed in order to confirm difference in the case where record is actually carried out by using the strategy, and is executed using a test record area installed in a medium. The test record is carried out using a specific pattern, which is capable of detecting deviation between the strategy and an actual state of record in an effective manner. It is thus possible to obtain reproduction patterns corresponding to the record patterns comprised of a plurality of recording pits formed by such test record, by reproducing the record pattern.

The reproduction pattern obtained through the reproduction of the test record result is various in type. Therefore, a variety of deviation, such as phase deviation or length deviation, can be detected by extracting and comparing two or more of the reproduction patterns, which are effective in detecting deviation between the strategy and the actual state of record.

The two reproduction patterns are configured by a signal in which deviation between the strategy and the actual state of record is reflected. It is thus possible to detect the relative amount of deviation based on one pattern by comparing the reproduction patterns.

The two reproduction patterns preferably have portions that are the same in a pit length or a land length, and different portions formed therebetween. For example, a construction in which front phase deviation of a predetermined pit is detected using a pattern in which 'the same pit, the same land and a heterogeneous pit' are consecutive, a construction in which rear phase deviation of a predetermined pit is detected using a pattern in which 'a heterogeneous pit, the same land and the same pit are consecutive, a construction in which interference deviation of a pit is detected using a pattern in which 'a heterogeneous pit, the same pit and the same land' are consecutive, and a construction in which deviation of pit balance is detected using a pattern in which 'the same land, a heterogeneous pit and the same land' are consecutive are possible.

In anyway, it is understood that the present invention is not limited to techniques in which two reproduction patterns are compared, but can be applied to techniques in which a plurality of reproduction patterns are compared, e.g., techniques in which a reference pattern and other patterns are compared using one reproduction pattern as the reference pattern.

In accordance with second aspect of the present invention, an optical information recording device for recording information on an optical recordable medium through pulse irradiation of laser light, including means that performs test record on the optical recordable medium using a plurality of recording pulses including a record pattern in which a fixed length pit, a fixed length land and a variable-length pit are consecutive and the length of the variable-length pit is different, means that reproduces the result of the test record to obtain a plurality of reproduction patterns respectively corresponding to the recording pulses, means that sets at least one of the reproduction patterns as a reference pattern, and sets at least one pattern other than the reference pattern as a comparison pattern, means that compares a signal of a portion corresponding to a fixed length land included in the reference pattern and a signal of a portion corresponding to a fixed length land included in the comparison pattern, and means that detects the amount of front phase deviation of a pit corresponding to the length of the variable-length pit included in the comparison pattern based on the comparison result.

As such, by employing the pattern in which the fixed length pit, the fixed length land and the variable-length pit are consecutive, the length of the fixed length land, which has to be constant in an ideal state of record, varies due to the influence of a front phase of the variable-length pit. It is thus possible to detect front phase deviation of the variable-length pit in an independent manner by detecting variation in the length. It is also preferred that all the lengths used for record are tested by sequentially changing the variable-length pits like 3T, 4T, ···, 14T.

In accordance with third aspect of the present invention, an optical information recording device for recording information on an optical recordable medium through pulse irradiation of laser light, including means that performs test record on the optical recordable medium using a plurality of recording pulses including a record pattern in which a variable-length pit, a fixed length land and a fixed length pit are consecutive and the length of the variable-length pit is different, means that reproduces the result of the test record to obtain a plurality of reproduction patterns respectively corresponding to the recording pulses, means that sets at least one of the reproduction patterns as a reference pattern, and sets at least one pattern other than the reference pattern as a comparison pattern, means that compares a signal of a portion corresponding to a fixed length land included in the reference pattern and a signal of a portion corresponding to a fixed length land included in the comparison pattern, and means that detects the amount of rear end phase deviation of a pit corresponding to the length of the variable-length pit included in the comparison pattern based on the comparison result.

As such, by employing the pattern in which the variable-length pit, the fixed length land and the fixed length pit are consecutive, the length of the fixed length land, which has to be constant in an ideal state of record, varies due to the influence of a rear phase of the variable-length pit. It is thus possible to detect rear phase deviation of the variable-length pit in an independent manner by detecting variation in the length. It is also preferred that all the lengths used for record are tested by sequentially changing the variable-length pit like 3T, 4T, ···, 14T.

In accordance with fourth aspect of the present invention, an optical information recording device for recording information on an optical recordable medium through pulse irradiation of laser light, including means that performs test record on the optical recordable medium using a plurality of recording pulses including a record pattern in which a variable-length land, a fixed length pit and a fixed length land are consecutive and the length of the variable-length land is different, means that reproduces the result of the test record to obtain a plurality of reproduction patterns respectively corresponding to the recording pulses, means that sets at least one of the reproduction patterns as a reference pattern, and sets at least one pattern other than the reference pattern as a comparison pattern, means that compares a signal of a portion corresponding to a fixed length pit included in the reference pattern and a signal of a portion corresponding to a fixed length pit included in the comparison pattern, and means that detects the amount of length deviation of a pit corresponding to the length of the variable-length land included in the comparison pattern based on the comparison result.

As such, by employing the pattern in which the variable-length land, the fixed length pit and the fixed length land are consecutive, the length of the fixed length pit which has to be constant in an ideal state of record varies due to the influence of thermal interference generating when a pit prior to the variable-length land is formed. It is thus possible to independently detect length deviation due to the influence of thermal interference of the fixed length pit by detecting variation in the length. It is also preferred that all the lengths used for record are tested by sequentially changing the variable-length land like 3T, 4T, ···, 14T.

In accordance with fifth aspect of the present invention, an optical information recording device for recording information on an optical recordable medium through pulse irradiation of laser light, including means that performs test record on the optical recordable medium using a plurality of recording pulses including a record pattern in which a variable-length land, a fixed length pit and a fixed length land are consecutive and the length of the variable-length land is different, means that reproduces the result of the test record to obtain a plurality of reproduction patterns respectively corresponding to the recording pulses, means that compares a signal of a portion corresponding to a fixed length pit included in each of the reproduction patterns and a prescribed length of a pit corresponding to the length of the fixed length pit, and means that detects the amount of length deviation of a pit corresponding to the length of the fixed length pit based on the comparison result.

As such, by comparing a signal of a portion corresponding to the fixed length pit and a prescribed length of a pit corresponding to the length of the fixed length pit, length deviation can be detected in an independent way based on thermal interference of the fixed length pit.

In accordance with sixth aspect of the present invention, an optical information recording device for recording information on an optical recordable medium through pulse irradiation of laser light, including means that performs test record on the optical recordable medium using a plurality of recording pulses including a record pattern in which a variable-length land, a variable-length pit and a fixed length land are consecutive and the length of the variable-length pit is different, means that reproduces the result of the test record to obtain a plurality of reproduction patterns respectively corresponding to the recording pulses, means that compares a signal of a portion corresponding to a variable-length pit included in each of the reproduction patterns and a prescribed length of a pit corresponding to the length of the variable-length pit, and means that detects the amount of length deviation of a pit corresponding to the length of the variable-length pit based on the comparison result.

As such, by employing a pattern in which the fixed length land, the variable-length pit and the fixed length land are consecutive, the length of the variable-length pit which must be identical to a prescribed length in an ideal state of record is changed due to the influence of lands before and behind and pits adjacent to the lands. It is thus possible to independently detect length deviation due to pit balance of the variable-length pit by detecting variation in the length. It is also preferred that all the lengths used for record are tested by sequentially changing the variable-length pit like 3T, 4T, ···, 14T.

In accordance with seventh aspect of the present invention, an optical information recording device for recording information on an optical recordable medium through pulse irradiation of laser light, including means that performs test record on the optical recordable medium using a predetermined strategy, means that reproduces the result of the test record to obtain a binarization signal, means that counts the pulse length of the binarization signal using a predetermined clock signal, means that stores the count result in a predetermined storage area, means that writes a histogram of the count result, means that specifies the pit length and the land length included in the binarization signal using the histogram, means that searches first and second reproduction patterns from the record area based on the specified pit length and land length, and means that detects deviation between the strategy and a record pattern formed by the test record, by comparing the first and second reproduction patterns obtained through the search.

As described above, the reproduction binarization signal obtained from the test record result is counted as a predetermined clock, and the count result is then stored. It is thus possible to perform a variety of statistical processing on the obtained reproduction patterns, or to extract specific patterns. The count of the reproduction binarization signal can be carried out using a counter that starts the count of the polarity reversing edge of the binarization signal. The length of a pit and the length of a land can be thus obtained as count data.

The count data obtained thus are stored in a predetermined record area of a memory device, etc., which is installed in the record device, and are then accumulated to a certain amount. The accumulated count data are used to write a histogram in which the occurrence frequency of each count value is analyzed. The range of the count value and the length of the pit and land are associated through the histogram. This allows for the search and extraction of data strings including desired pit and land patterns from the vast amounts of the count data stored in the storage area.

For example, in the case where front phase deviation of a predetermined pit is detected, pattern groups in which 'a fixed length pit, a fixed length land and a variable-length pit' are consecutive are searched, extracted and compared. In the case where rear phase deviation of a predetermined pit is detected, pattern groups in which 'a variable-length pit, a fixed length land and a fixed length pit' are consecutive are searched, extracted and compared. In the case where interference deviation of pits is detected, pattern groups in which 'a variable-length land, a fixed length pit and a fixed length land' are consecutive are searched, extracted and compared. In the case where deviation of pit balance is detected, pattern groups in which 'a fixed length land, a variable-length pit and a fixed length land' are consecutive are searched, extracted and compared.

As such, by processing the binarization signal obtained through reproduction of the test record result as the count data, the amount of deviation caused by various factors can be detected in the best suitable manner. It is also possible to execute data processing, such as the above histogram, using an operation element such as CPU installed in the record device.

Detection of the pit length and the land length using the histogram can be carried out using distribution of the occurrence frequency as the determination reference. This allows for effective decision although deviation between a strategy and an actual record pattern is high.

As described above, in accordance with the present invention, even in the case where deviation between an actually recorded pit and a defined strategy is great, detection of such deviation is possible. It is thus possible to provide a further optimized strategy.

### BRIEF DESCRIPTION OF THE DRAWINGS

Fig. 1 is a block diagram showing an internal construction of an optical information recording device according to the present invention;
Fig. 2 is a flowchart illustrating an execution sequence of a strategy decision process that is executed by the optical information recording device shown in Fig. 1;
Fig. 3 is a conceptual view showing the operational concept from the test record shown in Fig. 2 to the count of the reproduction data;
Fig. 4 is a conceptual view showing a storage image of the count result shown in Fig. 2;
Fig. 5 is a conceptual view showing the image of a written histogram shown in Fig. 2;
Fig. 6 is a conceptual view showing the image of threshold decision shown in Fig. 2;
Fig. 7 is a conceptual view showing an example of a threshold that is obtained by the method shown in Fig. 6;
Fig. 8 is a conceptual view showing an example of a record pattern and a reproduction pattern for detecting the amount of front phase deviation in each pit length;
Fig. 9 is a conceptual view showing an example of a record pattern and a reproduction pattern for detecting the amount of rear phase deviation in each pit length;
Fig. 10 is a view illustrating an example of a record pattern for detecting the amount of pit deviation due to thermal interference;
Fig. 11 is a view illustrating an example of detecting the amount of pit deviation due to thermal interference through comparison with a standard length;
Fig. 12 is a view illustrating an example of a record pattern for detecting the amount of deviation by pit balance;
Fig. 13 is a conceptual view showing a table configuration for searching a specific pattern used for deviation detection in the phase before the pit and deviation detection in the phase after the pit;
Fig. 14 is a conceptual view showing a table configuration for searching a specific pattern used for pit interference deviation detection and pit balance deviation detection;
Fig. 15 is a conceptual view of a concrete example in which the amount of deviation is detected through relative comparison of count results;
Fig. 16 is a conceptual view of a concrete example in which the amount of deviation is detected through absolute comparison of count results;
Fig. 17 is a flowchart illustrating an example of executing estimation of the amount of control shown in Fig. 2;
Fig. 18 is a conceptual view showing parameters that are changed by the record conditions S1 and S2 shown in Fig. 17;
Fig. 19 is a conceptual view showing the relation between variation in record conditions S1, S2 and the amount of deviation D1, D2;
Fig. 20 is a conceptual view showing an example of front phase deviation correction employing linear approximation;
Fig. 21 is a conceptual view showing an example of rear phase deviation correction employing linear approximation;
Fig. 22 is a conceptual view showing an example of length deviation correction employing linear approximation regarding the shape of a single pulse;
Fig. 23 is a conceptual view showing an example of length deviation correction employing linear approximation regarding the shape of multi pulses;
Fig. 24 is a conceptual view showing a table structure for storing the amount of correction Ttop and Tlast;
Fig. 25 is a conceptual view showing a table structure for storing the amount of correction PWD and Tmp; and
Fig. 26 is a conceptual view showing an example of recording pulses after correction.

### DESCRIPTION OF THE PREFERRED EMBODIMENTS

Hereinafter, an optical information recording device according to the present invention will be described in detail with reference to the accompanying drawings. It is, however, to be noted that the present invention is not limited to the following embodiments, but can be changed in a variety of ways.

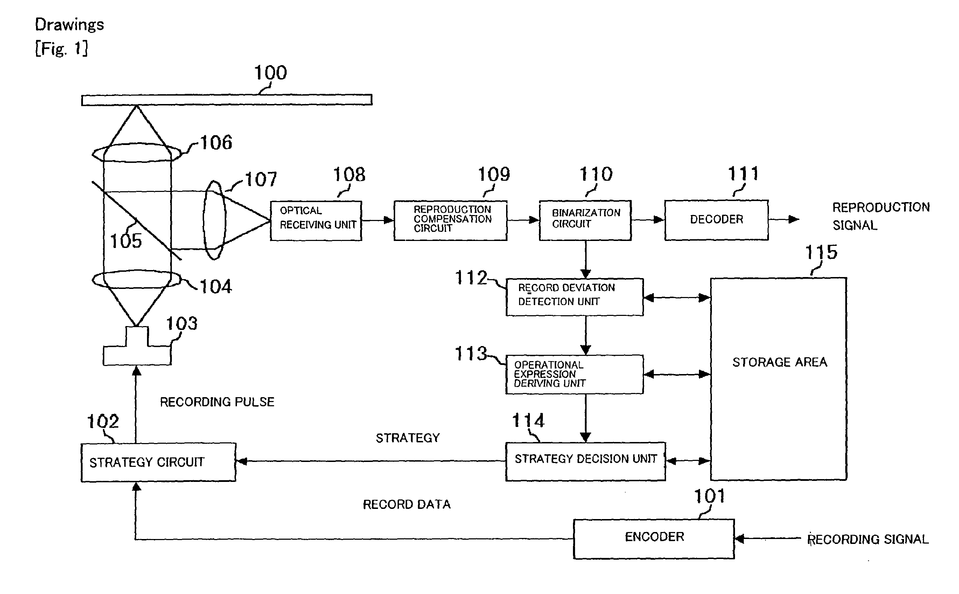

Fig. 1 is a block diagram showing an internal construction of an optical information recording device according to the present invention. As shown in Fig. 1, the optical information recording/reproducing device is adapted to record and reproduce information on and from an optical disk 100 using laser light output from a laser oscillator 103.

In the case where information is recorded on the optical disk 100, a recording signal corresponding to desired record information is encoded by means of an encoder 101 in the EFM mode, and the encoded record data are provided to a strategy circuit 102.

At this time, the strategy circuit 102 has various setting parameters of a predetermined strategy set therein. The strategy circuit 102 serves to correct various setting parameters of a strategy, and control the intensity of laser light output from the laser oscillator 103 or a pulse width, thus generating a recording pulse capable of obtaining a desired state of record.

The recording pulse formed by the strategy circuit 102 is applied to the laser oscillator 103. The laser oscillator 103 controls output laser light according to the recording pulse, and irradiates the controlled laser light toward the optical disk 100, which rotates at a constant linear velocity or at a constant rotational speed, through a lens 104, a half mirror 105 and a lens 106. A record pattern consisting of strings of pits and lands corresponding to desired record data is thus recorded on the optical disk 100.

Meanwhile, in the case where the information recorded on the optical disk 100 is reproduced, constant reproduction laser light output from the laser oscillator 103 is irradiated toward the optical disk 100, which rotates at a constant linear velocity or at a constant rotational speed, through the lens 104, the half mirror 105 and the lens 106.

At this time, the reproduction laser light has the intensity weaker than the laser light output from the laser oscillator 103 upon record. Reflected light of the reproduction laser light from the optical disk 100 is received by an optical receiving unit 108 through the lens 106, the half mirror 105 and a lens 107, and is then converted into the electric signal.

An electric signal output from the optical receiving unit 108 corresponds to the record pattern composed of pits and lands, which is recorded on the optical disk 100. The electric signal output from the optical receiving unit 108 undergoes a predetermined compensation process in a reproduction compensation circuit 109, and is then binarized by means of a binarization circuit 110. The signal is then decoded by a decoder 111, and is then output as a reproduction signal.

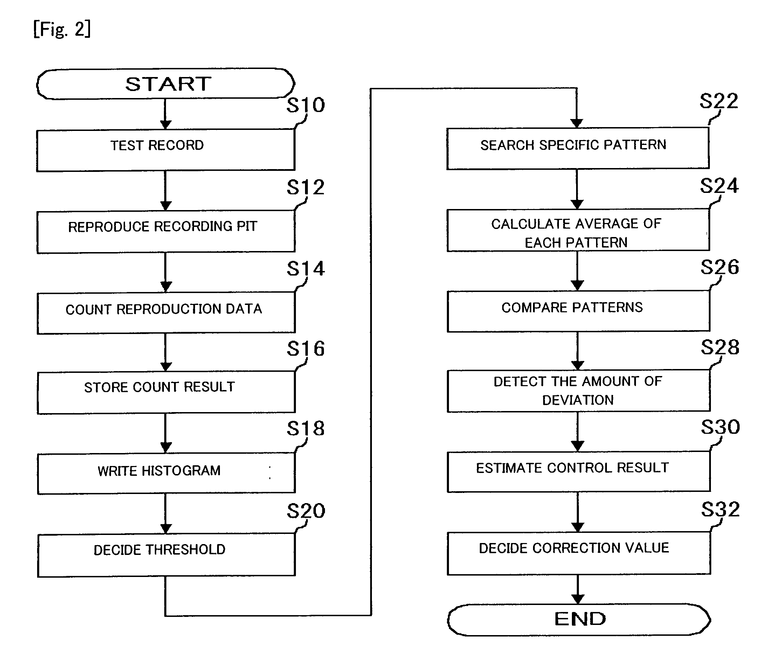

Fig. 2 is a flowchart illustrating the execution sequence of the strategy decision process that is executed by the optical information recording device shown in Fig. 1. Referring to Fig. 2, the optical information recording device shown in Fig. 1 first performs test record on the optical disk 100 in accordance to a plurality of record patterns in which various parameters of a strategy are changed in order to set the various parameters of the record strategy executed by the strategy circuit 102 (step S10).

Thereafter, the record pattern formed by the test record process is reproduced (step S12). A record deviation detection unit 112 then counts the reproduction binarization signals obtained from the binarization circuit 110 by a counter in synchronization with a predetermined clock (step S14), and then stores the lengths of the pits and lands included in the reproduction binarization signals in a record area 115 as count data (step S16).

The record deviation detection unit 112 then writes a histogram showing the occurrence frequency every count value using the count data accumulated on the record area 115 (step S18), and decides a threshold of the count result, which becomes the decision reference of a pit length and a land length, based on the histogram (step S20).

The record deviation detection unit 112 then searches plural kinds of specific patterns including specific pit/land patterns from the count data stored in the record area 115 on the basis of the threshold (step S22). It then finds an average length of each of the pits and the lands constituting the specific patterns by calculating an average of the count result having the same pit length included in the specific pattern and the count result having the same land length (step S24).

The record deviation detection unit 112 sets one of the plurality of the extracted specific patterns as the reference pattern, and then compares the reference pattern with other patterns (step S26) to detect the following amounts of deviation, respectively, in an independent way (step S28).
1) The amount of front phase deviation of the pit for the recording pulse
2) The amount of rear phase deviation of the pit for the recording pulse
3) The amount of pit deviation from the recording pulse by thermal interference
4) The amount of deviation in the length of the pit for the recording pulse

Thereafter, an operational expression deriving unit 113 derives an operational expression for deciding an optimal strategy based on the amount of deviation, which is detected by the record deviation detection unit 112. A strategy decision unit 114 estimates the control result of various parameters in accordance with the operational expression derived by the operational expression deriving unit 113 (step S30), decides a strategy correction value for adjusting a power or a pulse width of the laser light based on the estimated result, and sets the corrected optimal strategy in the strategy circuit 102 (step S32).

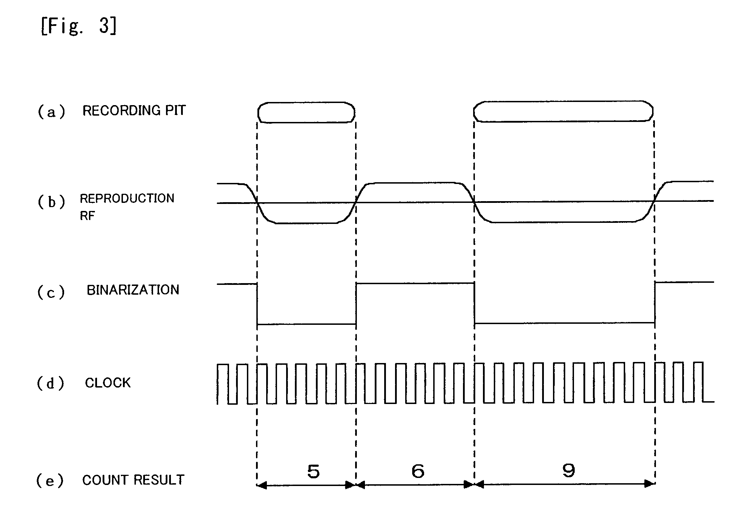

Fig. 3 is a conceptual view showing the operational concept from the test record shown in Fig. 2 to the count of the reproduction data. Referring to Fig. 3, in the case where test record is performed, recording pits as shown in Fig. 3A are formed on the optical disk. In the case where the recording pits are reproduced, a reproduction RF signal corresponding to the recording pits can be obtained, as shown in Fig. 3B. In the case where the reproduction RF signal is binarized, a reproduction binarization signal as shown in Fig. 3C can be obtained. In the case where the pulse length between polarity reversions of the binarization signal is counted using a clock signal as shown in Fig. 3D, the count result as shown in Fig. 3E can be obtained.

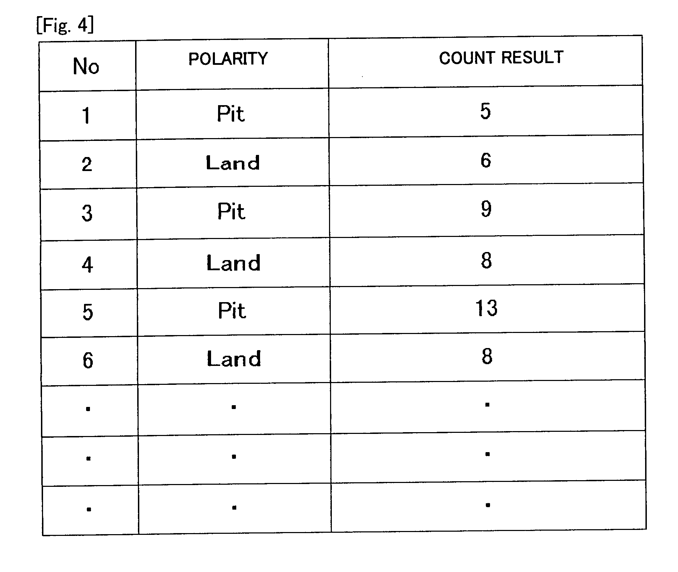

Fig. 4 is a conceptual view showing a storage image of the count result shown in Fig. 3. Referring to Fig. 4, the count results of the binarization signal counted using the clock signal are sequentially stored in a table installed in the storage area 115 in a time-series manner, while the pits and the lands are discriminated with a polarity reversing part serving as a break. The table shown in Fig. 4 is stored in a state that an address searchable afterwards is attached thereto.

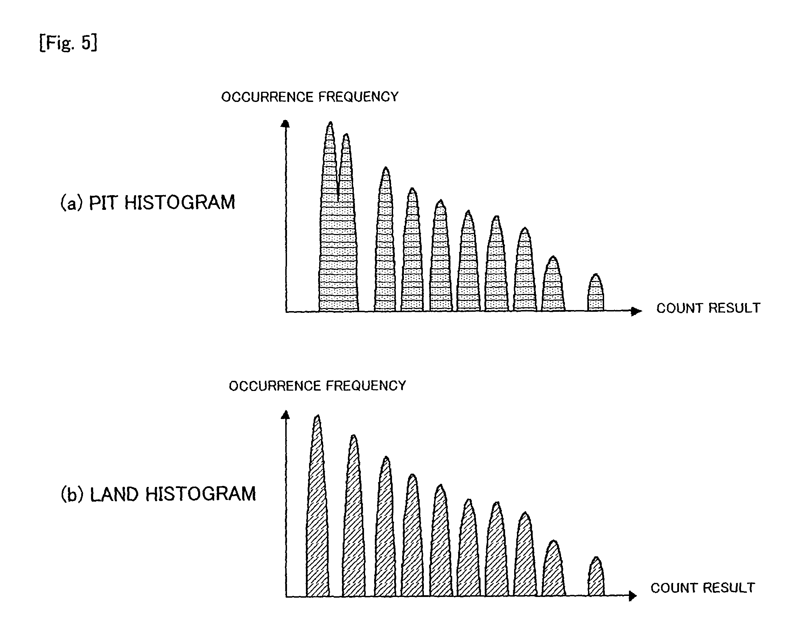

Fig. 5 is a conceptual view showing the image of the written histogram shown in Fig. 2. As shown in Fig. 5, in the case where the occurrence frequency of count values is graphed, a histogram can be obtained. In the case where the histogram is written with pits and lands being separated, two kinds of the histograms; a pit histogram showing the count tendency of pits shown in Fig. 5A, and a land histogram showing the count tendency of lands shown in Fig. 5B can be obtained. As such, in the optical disk, since the length of each unit length nT (n = 3, 4, 5, ···, 14) for the standard clock is necessarily decided, the hills of distribution of the occurrence frequency for each unit length nT can be obtained.

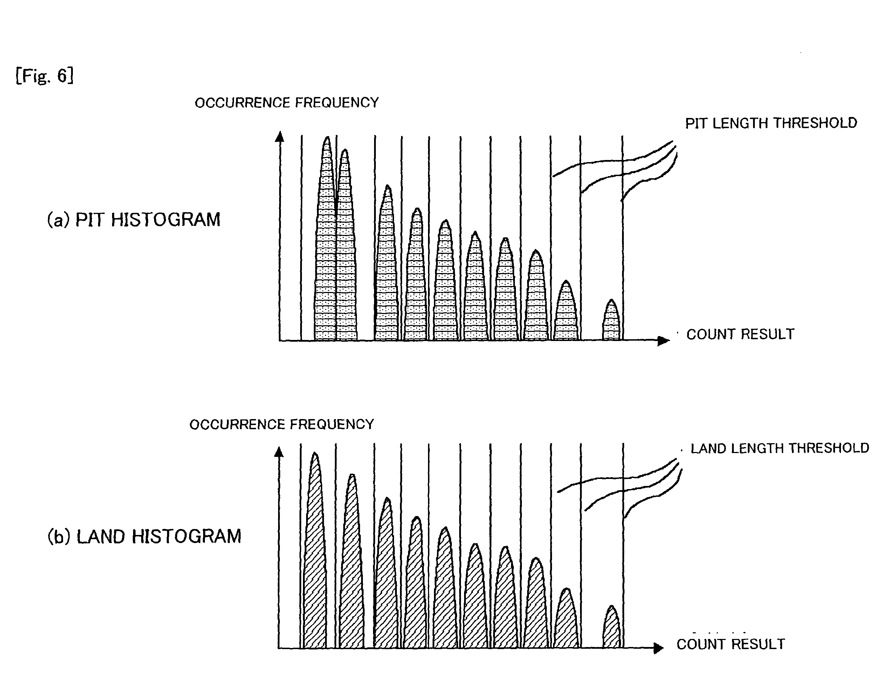

Fig. 6 is a conceptual view showing the image of threshold decision shown in Fig. 2. Referring to Fig. 6, since the portions of the valleys formed between the hills in the histogram can be used as a length decision threshold of each unit length nT, a pit length threshold that becomes the decision reference of the pit length, and a land length threshold that becomes the decision reference of the land length are set in the pit histogram and the land histogram, respectively.

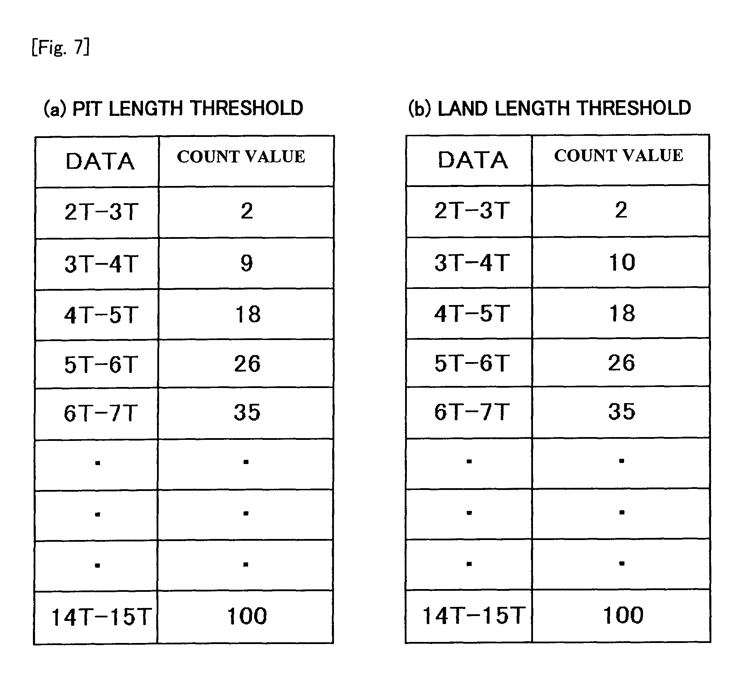

Fig. 7 is a conceptual view showing an example of a threshold that is obtained by the scheme shown in Fig. 6. The pit length threshold is defined at each border of each pit length, as shown in Fig. 7A, and the land length threshold is defined at each border of each land length, as shown in Fig. 7B. In the example shown in Fig. 7A, a threshold becoming the border of 2T and 3T is 'count value = 2', and a threshold becoming the border of 3T and 4T is 'count value = 9'. Thereafter the thresholds are set until the border of 14T and 15T. Furthermore, in the example shown in Fig. 7B, a threshold becoming the border of 2T and 3T is 'count value = 2', and a threshold becoming the border of 3T and 4T is 'count value = 10'. Thereafter, the thresholds are set until the border of 14T and 15T.

The details of each of the processes from the process of searching a specific pattern as shown in Fig. 2 (step S22) to the process of detecting the amount of deviation (step S28) will be below described. Those processes are carried out based on the detection principle of various deviations in the record deviation detection unit 112.

Fig. 8 is a conceptual view showing an example of a record pattern and a reproduction pattern for detecting the amount of front phase deviation in each pit length. Referring to Fig. 8, in the case where the amount of front phase deviation in each pit length is detected, test record is performed using a recording pulse shown in Fig. 8A. The recording pulse is one in which the pit length of the variable pit PzT is changed as 3T, 4T, ···, 7T, as shown in Figs. 8B to F with the pit length of a fixed pit PxT and the land length of a fixed land LyT being fixed, as well as a pattern in which the fixed pit PxT, a fixed land LyT and a variable pit PzT are continuous is included. Furthermore, although not shown in the drawing, change in the length of a variable pit is carried out until 14T.

In this case where the length of the fixed land LyT of a record pattern is measured, the measured length will be constant in an ideal state of record. In the case where the length of the fixed land LyT is too deviated from an ideally prescribed length, the amount of deviation in the ideally prescribed length of the fixed land LyT length corresponds to the amount of front phase deviation for the recording pulse of pits P3T, P4T, ···, P14T of each of 3T, 4T, ···, 14T in the strategy upon record since the pit length of the pit PxT is fixed.

The pattern of Fig. 8B in which the variable pit PzT becomes 3T is set as the reference pattern, and the remaining patterns from Figs. 8C to 8F are set as comparison patterns. In this state, in the case where the length of the fixed land LyT in the comparison patterns and the length of the fixed land LyT in the reference pattern are compared, the amount of front phase deviation FPS4T to FPS7T with respect to the reference pattern can be obtained, as shown in Figs. 8C to 8F.

At this time, it is not a problem if the amount of deviation FPS3T to FPS7T can be detected as relative values based on a given portion. Thus, the amount of front phase deviation FPS3T being the reference pattern can be defined as zero, or it can be detected as the amount of deviation from an ideal length. Furthermore, any one of the patterns shown in Figs. 8C to 8F can be set as the reference pattern instead of the pattern shown in Fig. 8B.

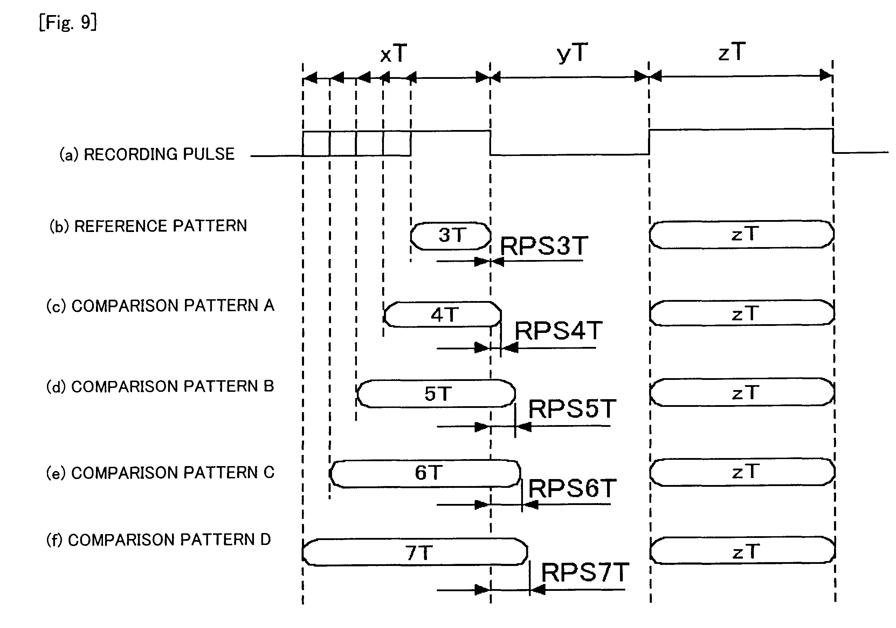

Fig. 9 is a conceptual view showing an example of a record pattern and a reproduction pattern for detecting the amount of rear phase deviation in each pit length. Referring to Fig. 9, in the case where the amount of rear phase deviation in each pit length is detected, test record is performed using a recording pulse shown in Fig. 9A. The recording pulse is one in which the pit length of the variable pit PxT is changed as 3T, 4T, ···, 7T, as shown in Figs. 9B to 9F with the land length of a fixed land LyT and the pit length of a fixed pit PzT being fixed, as well as a pattern in which the variable pit PxT, the fixed land LyT and the fixed pit PzT are consecutive is included. Furthermore, although not shown in the drawing, change in the length of the variable pit can be carried out until 14T.

In this case, in the case where the length of the fixed land LyT of the record pattern is measured, the measured length will be constant in an ideal state of record. If the length of the fixed land LyT is too deviated from an ideally prescribed length, the amount of deviation in the ideally prescribed length of the fixed land LyT length corresponds to the amount of rear phase deviation for the recording pulse of pits P3T, P4T, ···, P14T of each of 3T, 4T, ···, 14T in the strategy upon record since the pit length of the pit PzT is fixed.

Accordingly, the pattern of Fig. 9B in which the variable pit PxT becomes 3T is set as a reference pattern, and the remaining patterns of Figs. 9C to 9F are set as comparison patterns. In this state, in the case where the length of the fixed land LyT in the comparison patterns and the length of the fixed land LyT in the reference pattern are compared, the amounts of rear phase deviation RPS4T to RPS7T with respect to the reference pattern can be obtained, as shown in Figs. 9C to 9F.

At this time, it is not a problem if the amounts of the deviation RPS3T to RPS7T can be detected as relative values based on a given portion. Therefore, the amount of rear phase deviation of the reference pattern RPS3T can be defined as zero, or it can be detected as the amount of deviation from an ideal length. Further, any one of the patterns shown in Figs. 9C to 9F can be set as the reference pattern instead of the pattern shown in Fig. 9B.

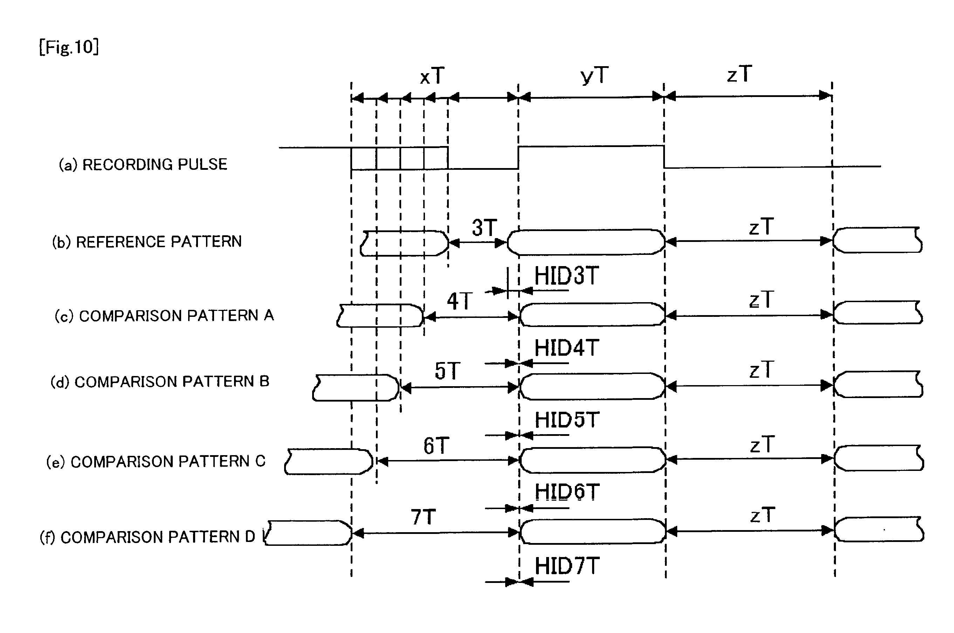

Fig. 10 is a view illustrating an example of a record pattern for detecting the amount of pit deviation due to thermal interference. Referring to Fig. 10, if the amount of pit deviation due to thermal interference is detected, test record is performed using a recording pulse shown in Fig. 10A. The recording pulse is one in which the land length of a variable land LxT is changed as 3T, 4T, ···, 7T, as shown in Figs. 10B to 10F with the pit length of a fixed pit PyT and the land length of a fixed land LzT being fixed, as well as a pattern in which the land LxT, the pit PyT and the land LzT are consecutive is included. Furthermore, although not shown in the drawing, change in the length of the variable land can be performed until 14T.

In this case, in the case where the length of the fixed pit PyT of the record pattern is measured, the measured length will be constant in an ideal state of record. In the case where the length of the fixed pit PyT is too deviated from an ideally prescribed length, the amount of deviation in the ideally prescribed length of the fixed pit PyT corresponds to the amount of deviation due to thermal interference of a pit formed immediately before the variable land LxT because the land length of the land LzT is fixed.

Accordingly, the pattern of Fig. 10B in which the variable land LxT becomes 3T is set as a reference pattern, and the remaining patterns of Figs. 10C to 10F are set as comparison patterns. In this state, in the case where the length of the fixed pit PyT of the comparison patterns and the length of the fixed pit PyT of the reference pattern are compared, the amounts of front phase deviation HID3T to HID7T with respect to the reference pattern can be obtained, as shown in Figs. 10C to 10F.

At this time, it is not a problem if the amounts of the deviation HID3T to HID7T can be detected as relative values based on a given portion. Therefore, the amount of front phase deviation of the reference pattern HID3T can be defined as zero, or it can be detected as the amount of deviation from an ideal length. Further, any one of the patterns shown in Figs. 10C to 10F can be set as the reference pattern instead of the pattern shown in Fig. 10B.

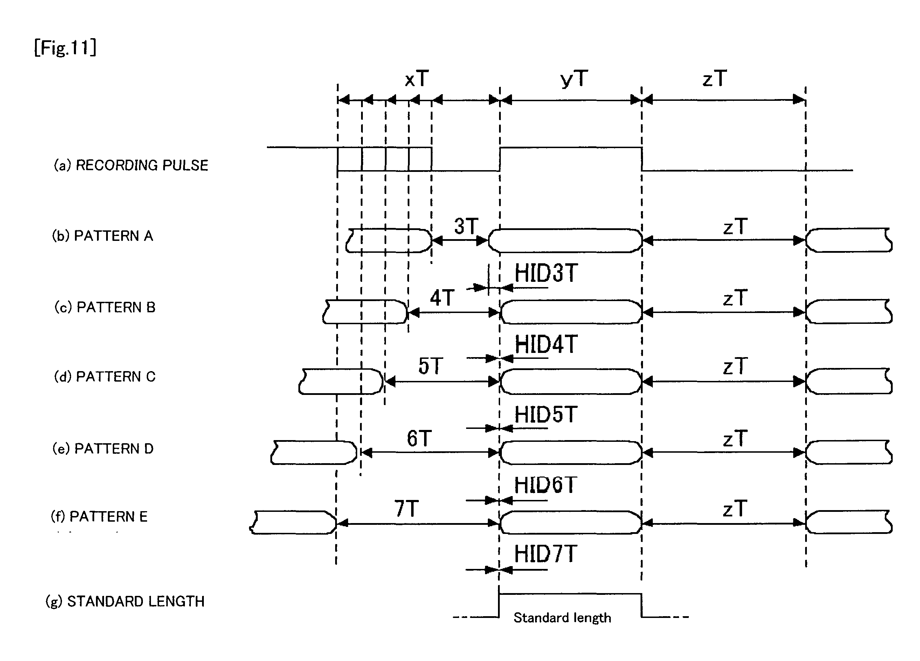

Fig. 11 is a view illustrating an example of detecting the amount of pit deviation due to thermal interference through comparison with a standard length. Referring to Figs. 11B to 11G, the amounts of front phase deviation HID3T to HID7T can be found by comparing the fixed pit PyT of each pattern with the standard length without setting the reference pattern as in Fig. 10.

Fig. 12 is a view illustrating an example of a record pattern for detecting the amount of deviation by pit balance. Referring to Fig. 12, in the case where the amount of deviation due to pit balance is detected, test record is performed using a recording pulse shown in Fig. 12A. The recording pulse is one in which the pit length of a variable pit PxT is changed as 3T, 4T, ···, 7T, as shown in Figs. 12B to 12F with the land length of a fixed land LyT and the land length of a fixed land LzT being fixed, as well as a pattern in which a land LxT, a pit PyT and a land LzT are consecutive is included. Furthermore, although not shown in the drawing, change in the length of the variable land is carried out until 14T.

In this case, in the case where the length of the variable pit PyT of the record pattern is measured, the measured length will correspond to each ideal pit length in an ideal state of record.

In the case where the length of the variable pit PyT is too deviated from an ideally prescribed length, the amount of deviation from a prescribed length of the pit PyT of the variable length corresponds to the amount of length deviation for a recording pulse of pits P3T, P4T, ···, P14T of each of 3T, 4T, ···, 14T in a strategy upon record because the land length of the land LxT and the land length of the land LzT are fixed.

Accordingly, in the case where the amount of deviation from the ideal length of each pit length is detected through comparison of the record result of the pit PyT of the variable length and the standard length of each pit, as shown in Figs. 12B to 12F by performing test record using any strategy, the amount of length deviation in each pit length can be detected from a reproduction pattern of the test record by the recording pulse.

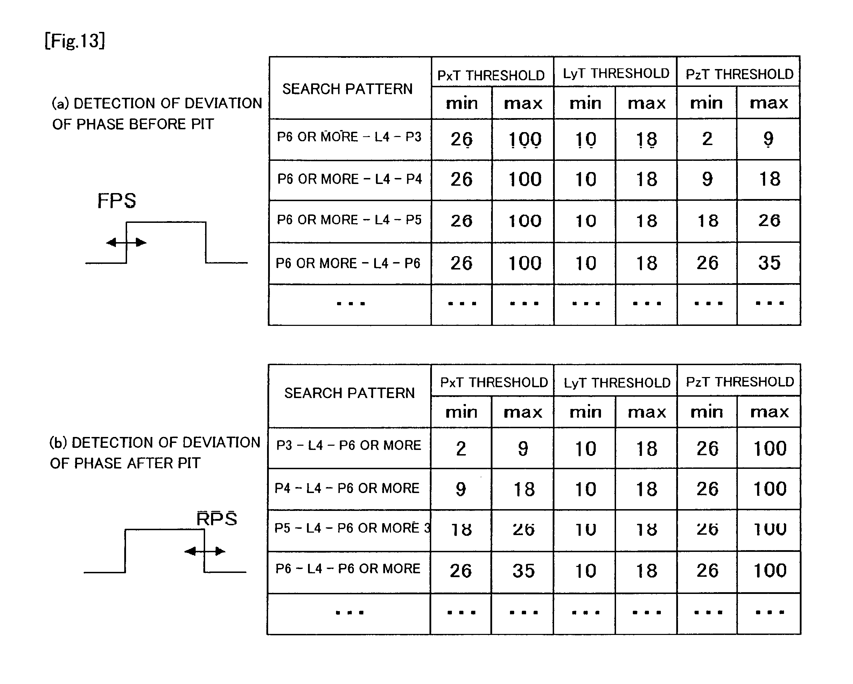

Fig. 13 is a conceptual view showing a table configuration for searching a specific pattern used for deviation detection in the phase before the pit and deviation detection in the phase after the pit. In the case where deviation in the phase before the pit is detected, a data string that fulfills a threshold is extracted by searching data stored in the storage area 115 of Fig. 1 (corresponding to step S22 in Fig. 2) on the basis of the range of the threshold shown in Fig. 13A regarding the pit PxT, the land LyT and the pit PzT which are set on a specific pattern basis.

Next, count results respectively corresponding to the pit PxT, the land LyT and the pit PzT are discriminated, and an average value of each of the pit PxT, the land LyT and the pit PzT is then found (corresponding to step S24 in Fig. 2). If pattern comparison shown in Fig. 8 is performed using the average values of the count results, the amount of front phase deviation in each pit length can be obtained. Fig. 13B shows an example of the threshold in the case where detection of deviation in the phase after the pit is carried out. The spirit and operation of Fig. 13B are the same as those in the case where detection of deviation in the phase before the pit is carried out.

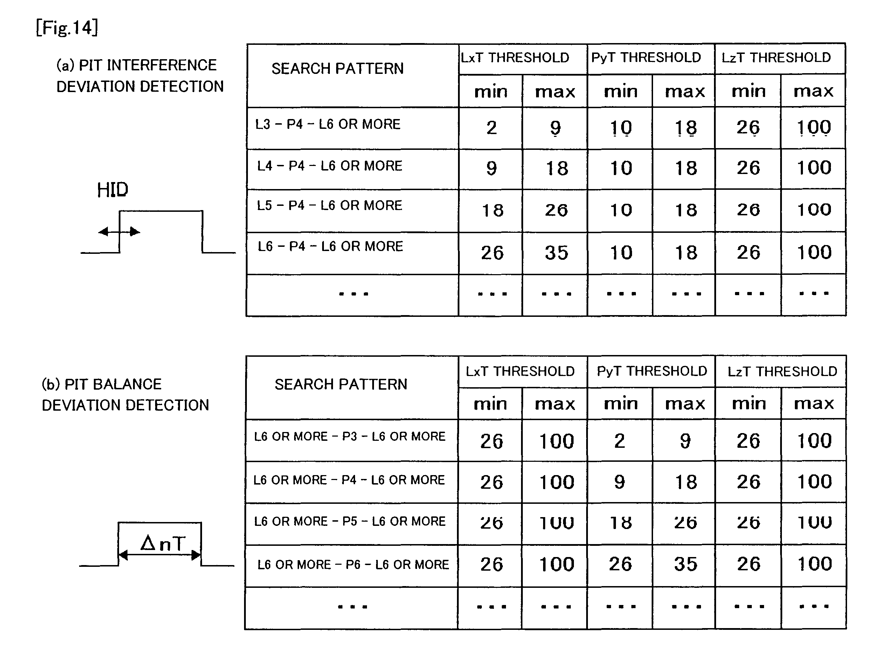

Fig. 14 is a conceptual view showing a table configuration for searching a specific pattern used for pit interference deviation detection and pit balance deviation detection. As shown in Figs. 14A and 14B, detection of pit interference deviation and detection of pit balance deviation are also performed in the same manner as that of deviation in the phase before the pit and deviation in the phase after the pit, which have been described with reference to Figs. 13A and 13B.

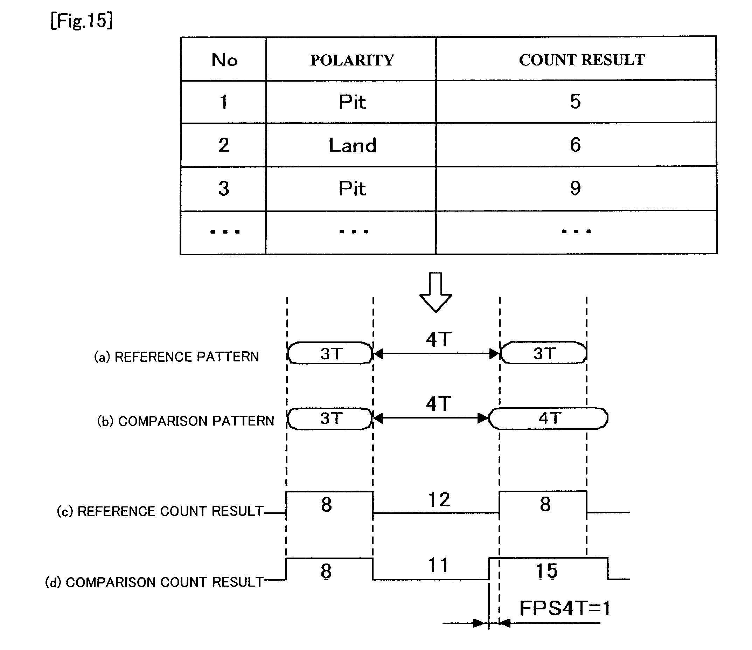

Fig. 15 is a conceptual view of a concrete example in which the amount of deviation is detected through relative comparison of count results. In Fig. 15, there is shown an example in which deviation in the phase before the pit is detected. The amounts of deviation except for that can be also detected in the same manner. In the case where the amounts of deviation is detected, a reference pattern and a comparison pattern shown in Figs. 15A and B are first searched in and extracted from the data stored in the storage area, and count values for portions, which must have been originally a fixed length, are compared, as shown in Figs. 15C and 15D. In the example shown in Fig. 15, since a land LyT becomes a portion of comparison, a difference between '12' shown in Fig. 15C being the count result of the reference pattern and '11' shown in Fig. 15D being the count result of the comparison pattern is found, and the found difference '1' becomes the value of the amount of deviation FPS4T.

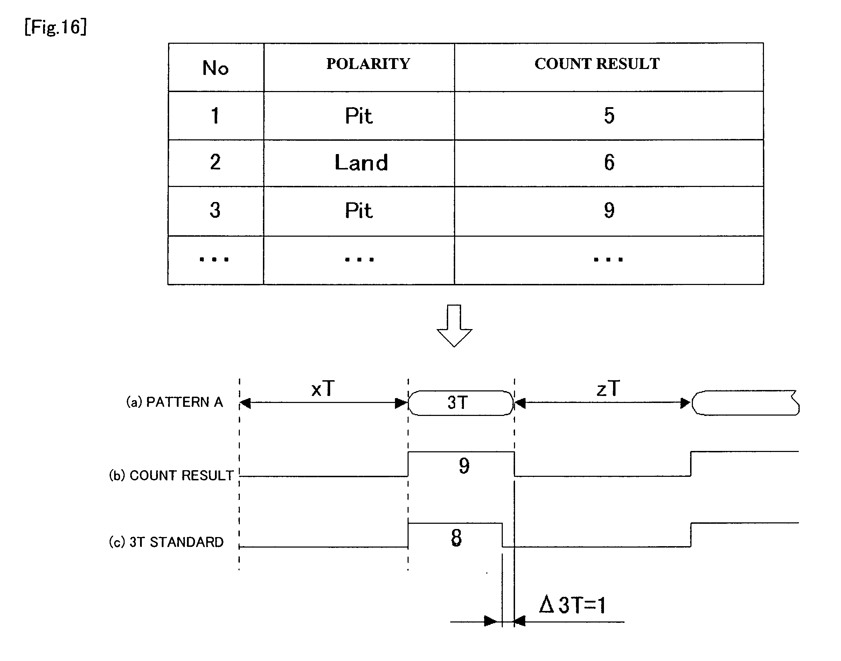

Fig. 16 is a conceptual view of a concrete example in which the amount of deviation is detected through absolute comparison of count results. Referring to Fig. 16, in the case where the amount of deviation is detected through comparison with an ideal standard length, a specific pattern shown in Fig. 16A is first searched in and extracted from data groups stored in the storage area, and count values of both for a portion that becomes an object of comparison are compared, as shown in Figs. 16B and 16C. In the example shown in Fig. 16, since a pit 3T is the portion of comparison, a difference between '9' shown in Fig. 16B being count result of a specific pattern and '8' shown in Fig. 16C being the count result corresponding to the standard length are found, and the obtained difference '1' becomes a value of the amount of deviation of the pit 3T.

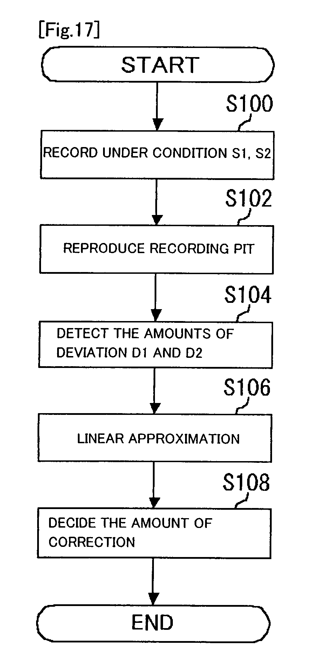

Fig. 17 is a flowchart illustrating an example of performing estimation of the amount of control shown in Fig. 2. Referring to Fig. 17, the process of estimating the amount of control can be performed by executing a series of processes of performing test record under two or more kinds of conditions, such as S1 and S2 having different record conditions, (step S100), reproducing the obtained recording pits (step S102), finding the amount of deviation D1 corresponding to the condition S1 and the amount of deviation D2 corresponding to the condition S2 through comparison of obtained reproduction patterns (step S104), performing linear approximation on the relation between the conditions S1 and S2 and the amount of deviation D1 and D2 (step S106), and deciding the amount of optimal correction based on the straight line (step S108).

The amounts of the deviation D1 and D2 detected as such, however, vary depending upon various setting parameters of a strategy. Further, it was found that the amounts of the deviation D1 and D2, which vary depending upon various setting parameters of a strategy, is changed almost in the linear shape as a result of analysis.

That is, the amount of deviation in each test record detected by the record deviation detection unit 112 can be considered as change in the linear shape, which is approximated according to a least-square method.

Therefore, in the optical information recording device according to the present embodiment, e.g., if test record is performed twice, an optimal strategy can be decided by aiming at the linear relation between various setting parameters of a strategy and the straight line of the amounts of the detected deviation D1 and D2. According to the present invention, however, curve approximation can also be performed instead of the linear approximation.

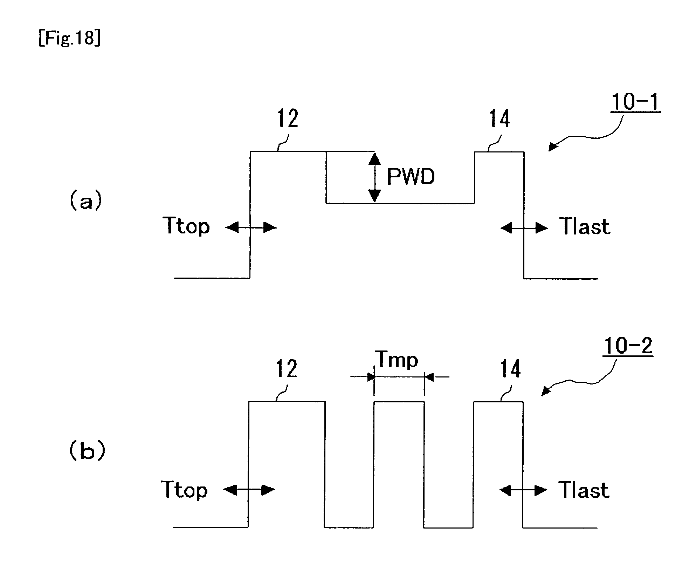

Fig. 18 is a conceptual view showing parameters that are changed by the record conditions S1 and S2 shown in Fig. 17. Fig. 18A shows an example in which a single pulse consisting of a single pulse pattern is employed. Fig. 18B shows an example in which a multi-pulse composed of a plurality of pulse patterns is employed.

As shown in Figs. 18A and 18B, a single pulse 10-1 and a multi pulse 10-2 include a first pulse 12 disposed at the head of a pulse, and a rear end pulse 14 disposed at the rear end of the pulse, respectively. The amount of energy of the entire recording pulse is prescribed as the height of each pulse, the amount of energy at the head end, which is applied to the head of the recording pit, is defined as the length indicated by a first pulse width Ttop. The amount of energy applied to the rear end of the recording pit is prescribed as the length indicated by a rear end pulse width Tlast.

Furthermore, as another control factor, in case of the single pulse 10-1, a low power area, which is lower by PWD than a main power PW, is formed between the first pulse 12 and the rear end pulse 14, as shown in Fig. 18A. If the amount is regulated, a recording pit is prevented from being astray. In the same manner, in case of the multi pulse 10-2, the width Tmp of an intermediate pulse disposed between the first pulse 12 and the rear end pulse 14 is regulated, as shown in Fig. 18B. Thus, a recording pit is prevented from being astray.

The aforementioned parameters Ttop, Tlast, PWD and Tmp become representative parameters that change the record conditions S1 and S2. These parameters are changed by means of the conditions S1, S2, and its influence are then detected by means of the amounts of the deviation D1 and D2. Linear approximation is performed using these four points, and the amount of correction capable of canceling deviation is obtained using a corresponding straight line.

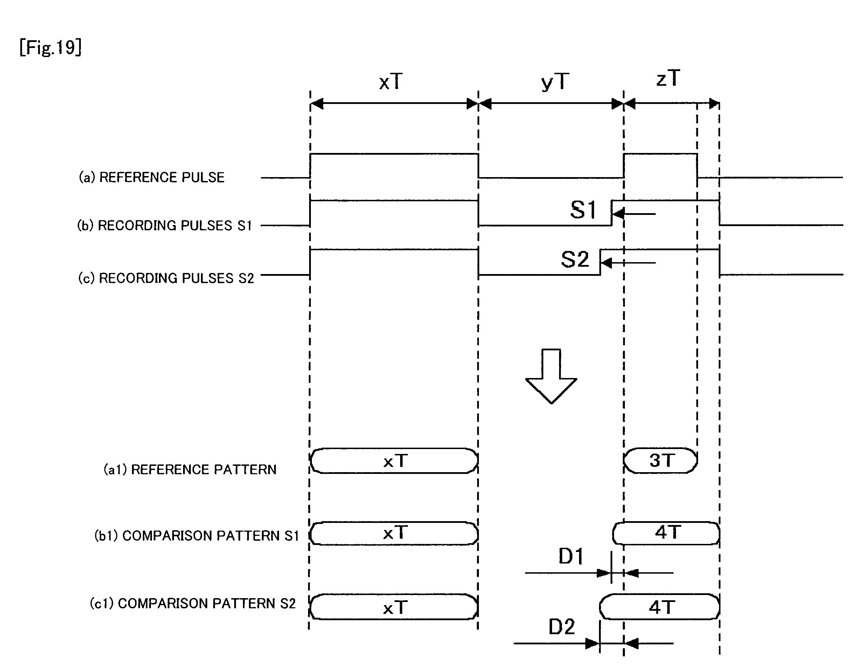

Fig. 19 is a conceptual view showing the relation between change in the record conditions S1, S2 and the amounts of deviation D1, D2. Assuming that a recording pulse shown in Fig. 19A is a reference pulse of 'PzT = 3T', the recording pulse of 'PzT = 4T' that becomes an object of comparison performs test record under two conditions such as the recording pulse S1 of Fig. 19B in which the head of PzT is changed according to the condition S1, and the recording pulses S2 of Fig. 19C in which the head of PzT is changed according to the condition S2.

As a result, a reference pattern shown in Fig. 19A1 corresponding to the recording pulse of Fig. 19A is obtained, a comparison pattern S1 shown in Fig. 19B1 corresponding to the recording pulse of Fig. 19B is obtained, and a comparison pattern S2 shown in Fig. 19C1 corresponding to the recording pulse of Fig. 19C is obtained. At this time, the comparison pattern S1 causes the amount of deviation of D1 to occur corresponding to the amount of control S1, and the comparison pattern S2 causes the amount of deviation of D2 to occur corresponding to the amount of control S2.

If the amounts of the deviation D1 and D2 with respect to the amounts of the control S1 and S2 are found, it is possible to estimate how much will be deviation generated assuming that some amount of control is given to a given parameter. The estimation of the amount of control and the decision of correction values are carried out using such a relation.

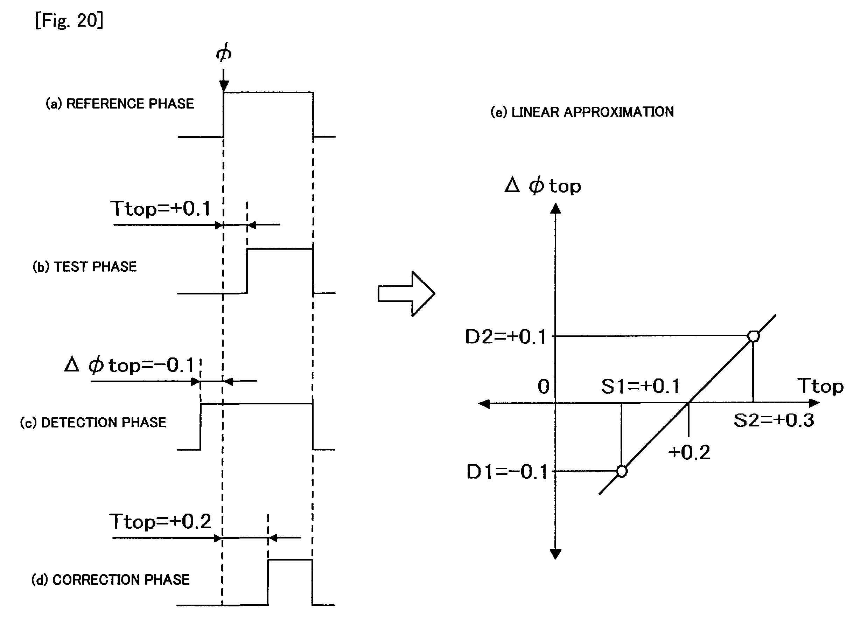

Fig. 20 is a conceptual view showing an example of front phase deviation correction employing linear approximation. In the case where the amount of correction Ttop for front phase deviation is decided, when a pulse position becoming the reference is a reference phase φ as shown in Fig. 20A, test record is performed using a waveform in which the pulse position is deviated by Ttop (corresponding to the record conditions S1, S2), as shown in Fig. 20B. As a result, phase deviation Δφtop of the obtained reproduction signal is detected, as shown in Fig. 20C (corresponding to the amount of deviation D1, D2).

In the example shown in Fig. 20, change of Ttop undergoes the two kinds; S1 = +0.1 and S2 = +0.3. The resulting detection phase Δφtop is obtained as the amount of deviation D1 = -0.1 and D2 = +0.1. Furthermore, the relation between the control result Δφtop and the amount of control Ttop experiences linear approximation using the obtained parameters S1, S2, D1 and D2, as shown in Fig. 20E, and a correction phase Ttop = +0.2 capable of canceling phase deviation is thus decided as an optimal correction value using the straight line.

As such, the relation between change of a strategy S1, S2 and change in the amount of deviation D1, D2 can undergo linear approximation or curve approximation if at least two-change point is found. It is thus possible to obtain the amount of optimal correction, in which the amount of deviation becomes zero, using the straight line.

In more detail, the amount of deviation D when the strategy S is changed by way of plural points is found, and constants a, b are found by substituting the relation between the strategy S and the amount of deviation D into a common equation 'D = a × S + b' in order to solve simultaneous equations. Finally, the strategy S corresponding to the amount of ideal deviation D is found, and the strategy S is set in the strategy circuit 102 shown in Fig. 1, so that optimal correction of the recording pulse can be performed.

For example, assuming that the amount of deviation, which is detected from a reproduction pattern of test record using a strategy S1, is D1, and the amount of deviation, which is detected from a reproduction pattern of test record using a strategy S2, is D2, by means of the record deviation detection unit 112 shown in Fig. 1, "a" and "b" are calculated based on D1 = a × S1 + b, and D2 = a × S2 + b, and a function S = (D-b)/a using the calculated a and b is found. The optimal strategy S is decided by substituting the output amount of deviation D for improving record fitness, e.g., for correcting initial output deviation, etc., which occurs in an equalizer, into the above function.

Furthermore, the function for finding the optimal strategy S can be found corresponding to pits P3T, P4T, ···, P14T of each of 3T, 4T, ···, 14T. The function for finding the optimal strategy S can be found corresponding to the record speed.

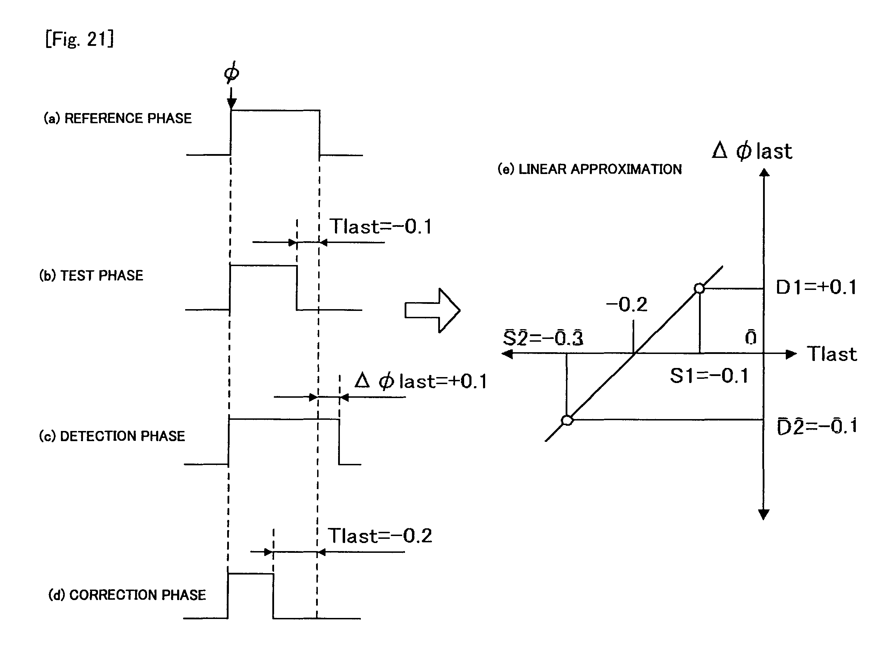

Fig. 21 is a conceptual view showing an example of rear phase deviation correction employing linear approximation. In the case where the amount of correction Tlast for rear phase deviation is decided, when a pulse position becoming the reference is a reference phase φ as shown in Fig. 21 A, test record is performed using a waveform in which the pulse position is deviated by Tlast, as shown in Fig. 21 B. As a result, phase deviation Δφlast of an obtained reproduction signal is detected, as shown in Fig. 21 C.

In the example shown in Fig. 21, change of Tlast undergoes two kinds, that is, S1 = -0.1 and S2 = -0.3. A resulting detection phase Δφlast is obtained as the amount of deviation D1 = +0.1 and D2 = -0.1. Furthermore, the relation between the control result Δφlast and the amount of control Tlast experiences linear approximation using the obtained S1, S2, D1 and D2, as shown in Fig. 21 E, and a correction phase Tlast = -0.2 capable of canceling phase deviation is thus decided as an optimal correction value using the straight line.

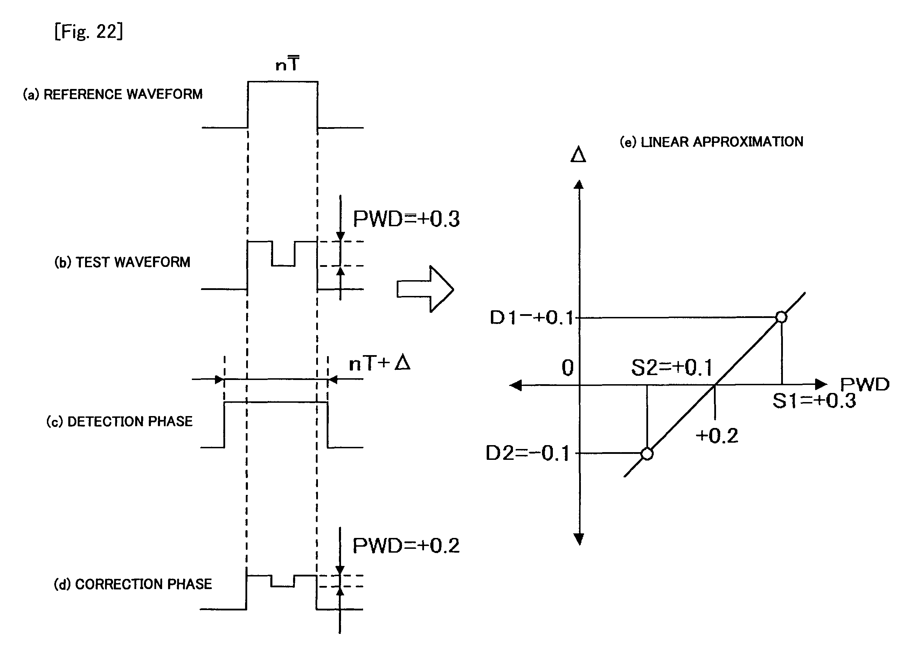

Fig. 22 is a conceptual view showing an example of length deviation correction employing linear approximation regarding the shape of a single pulse. In the event that the amount of correction PWD for corresponding length deviation is decided, when a pulse length becoming the reference is a reference waveform nT as shown in Fig. 22A, test record is performed using a waveform in which the center of the pulse is obviated by PWD, as shown in Fig. 22B. Resultantly, length deviation Δ of an obtained reproduction signal can be detected, as shown in Fig. 22C.

In the example shown in Fig. 22, change of PWD undergoes two kinds, that is, S1 = +0.3 and S2 = +0.1. This results in length deviation Δ as the amount of deviation D1 = +0.1 and D2 = -0.1. Further, the relation between the control result Δ and the amount of control PWD experiences linear approximation using the obtained S1, S2, D1 and D2, as shown in Fig. 22E, and a correction amount PWD = +0.2 capable of canceling length deviation is thus decided as an optimal correction value using the straight line.

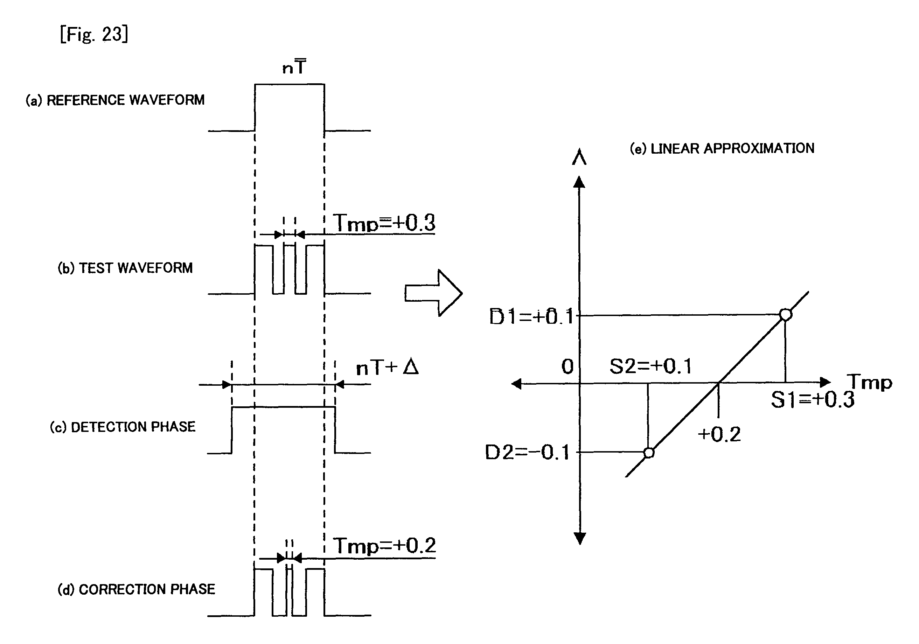

Fig. 23 is a conceptual view showing an example of length deviation correction employing linear approximation regarding the shape of multi pulses. In the case where the amount of correction Tmp for corresponding length deviation is decided, when a pulse length becoming the reference is a reference waveform nT as shown in Fig. 23A, test record is performed using a waveform in which an intermediate pulse length is Tmp as shown in Fig. 23B. As a result, length deviation Δ of an obtained reproduction signal is detected, as shown in Fig. 23C.

In the example shown in Fig. 23, change of Tmp undergoes two kinds, that is, S1 = +0.3 and S2 = +0.1. This leads to length deviation Δ as the amount of deviation D1 = +0.1 and D2 = -0.1. Further, the relation between the control result Δ and the amount of control Tmp experiences linear approximation using the obtained S1, S2, D1 and D2, as shown in Fig. 23E, and a correction amount Tmp = +0.2 capable of canceling length deviation is thus decided as an optimal correction value using the straight line.

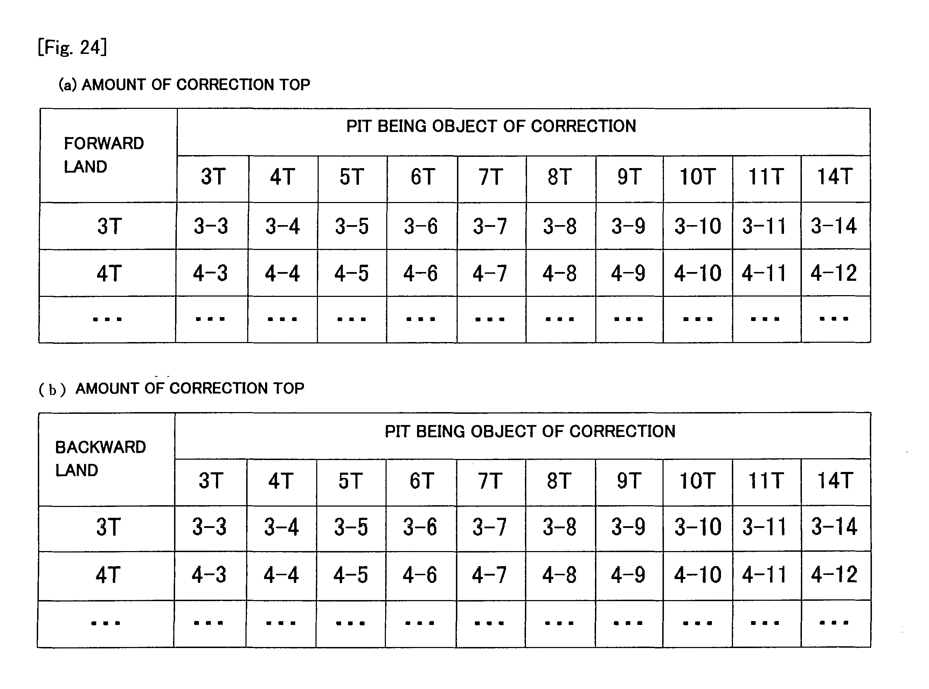

Fig. 24 is a conceptual view showing a table structure for storing the amount of correction Ttop and Tlast. As shown in Fig. 24A, the amount of correction Ttop is defined with it being combined with the forward land length of each pit every pit length becoming an object of correction. For example, if a pit being the object of correction is 3T and the forward land of the pit is 3T, the amount of correction is stored in an area indicated by '3-3' in the drawing. If a pit being the object of correction is 4T and the forward land of the pit is 3T, the amount of correction is stored in an area indicated by '3-4' in the drawing. The same principle as that of 3T and 4T is applied to 5T, ···, 14T.

Furthermore, as shown in Fig. 24B, the amount of correction Tlast is defined with it being combined with the backward land length of each pit every pit length becoming the object of correction. For example, when a pit being the object of correction is 3T and the backward land of the pit is 3T, the amount of correction is stored in an area indicated by '3-3' in the drawing. If a pit being the object of correction is 4T and the backward land of the pit is 3T, the amount of correction is stored in an area indicated by '3-4' in the drawing. The same principle as that of 3T and 4T is applied to 5T, ···, 14T.

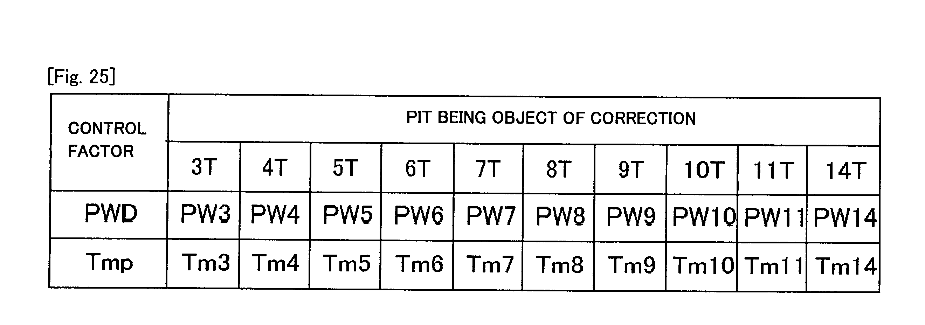

Fig. 25 is a conceptual view showing a table structure for storing the amount of correction PWD and Tmp. As shown in Fig. 25, the amount of correction PWD and Tmp is defined every pit length becoming the object of correction. For example, the amount of correction PWD when a pit being the object of correction is 3T is stored in an area indicated by 'PW3' in the drawing. The amount of correction Tmp when the pit being the object of correction is 3T is stored in an area indicated by 'Tm3' in the drawing. The same principle as that of 3T is applied to 4T, 5T, ···, 14T.

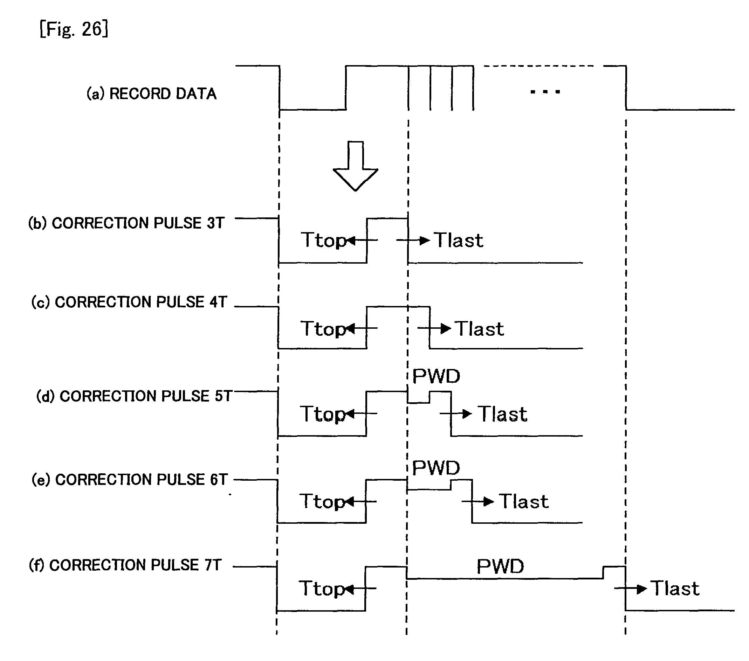

Fig. 26 is a conceptual view showing an example of a recording pulse after correction. In the case where record data shown in Fig. 26A is recorded on the optical disk, a strategy to which an optimal correction value is applied is set on a pit-length basis. For example, in the event that 3T pit is recorded, a front correction value Ttop of 3T pit is read corresponding to the land length at a position former than the table shown in Fig. 24, as shown in Fig. 26B, and a rear correction value Tlast of 3T pit is read corresponding to the backward land length. Thus, the front and rear ends of the recording pulse are corrected using corresponding Ttop and Tlast.

In the case where 4T pit is corrected, Ttop and Tlast are corrected in the same sequence as that of 3T pit, as shown in Fig. 26C. In the event that a pit having the length of 5T or more is corrected, a PWD correction value of a corresponding pit length is read from the table shown in Fig. 25 as well as Ttop and Tlast, as shown in Figs. 26D to 26F. Therefore, the pulse shape corresponding to the value of corresponding PWD is corrected.

Furthermore, in the above embodiments, it has been described that an optimal strategy S is decided by substituting the amount of deviation D into the function for finding the optimal strategy S. It is, however, to be understood that the optimal strategy S can be decided based on the correction table using the correction table obtained from the function.

Furthermore, the process of setting the optimal strategy can be performed whenever the type of an optical disk is changed or the record speed varies. The condition of the optimal strategy, which is decided in the process of setting the optimal strategy, is stored in a memory in such a way to correspond to the type of the optical disk and the record speed. In this state, in the case where record is again performed using the same kind of the optical disk or at the same record speed, the optimal strategy stored in the memory can be read and used.

### Industrial Applicability

According to the present invention, even in the case where deviation between an actually recorded pit and a defined strategy is great, detection of the deviation is possible. Coping with stricter record environment is expected accordingly.

## Claims

1. An optical information recording device for recording information on an optical recordable medium through pulse irradiation of laser light, comprising:
means for performing test recording on the optical recordable medium using a predetermined strategy;
means for comparing with a first reproduction pattern and a second reproduction pattern, which are obtained by reproducing the test recording result; and
means for detecting deviation between the strategy and a recorded pattern formed by the test recording,
wherein the detecting deviation is performed by using the comparison result.

2. An optical information recording device for recording information on an optical recordable medium through pulse irradiation of laser light, comprising:
means for performing test recording on the optical recordable medium using a plurality of recording pulses including a recorded pattern in which a fixed length pit, a fixed length land and a variable-length pit are consecutive and the length of the variable-length pits are different;
means for obtaining a plurality of reproduction patterns that correspond to each of the recording pulses by reproducing the result of the test recording;
means for setting at least one of the reproduction patterns as a reference pattern, and sets at least one pattern other than the reference pattern as a comparison pattern;
means for comparing a signal of a portion corresponding to a fixed length land included in the reference pattern and a signal of a portion corresponding to a fixed length land included in the comparison pattern; and
means for detecting the amount of front phase deviation of a pit corresponding to the length of the variable-length pit included in the comparison pattern based on the comparison result.

3. An optical information recording device for recording information on an optical recordable medium through pulse irradiation of laser light, comprising:
means for performing test recording on the optical recordable medium using a plurality of recording pulses including a recorded pattern in which a variable-length pit, a fixed length land and a fixed length pit are consecutive and the length of the variable-length pits are different;
means for obtaining a plurality of reproduction patterns corresponding to each of the recording pulses by reproducing the result of the test recording;
means for setting at least one of the reproduction patterns as a reference pattern, and sets at least one pattern other than the reference pattern as a comparison pattern;
means for comparing a signal of a portion corresponding to a fixed length land included in the reference pattern and a signal of a portion corresponding to a fixed length land included in the comparison pattern; and
means for detecting the amount of rear end phase deviation of a pit corresponding to the length of the variable-length pit included in the comparison pattern based on the comparison result.

4. An optical information recording device for recording information on an optical recordable medium through pulse irradiation of laser light, comprising:
means for performing test recording on the optical recordable medium using a plurality of recording pulses including a recorded pattern in which a variable-length land, a fixed length pit and a fixed length land are consecutive and the lengths of the variable-length lands are varied;
means for obtaining a plurality of reproduction patterns corresponding to each of the recording pulses;
means for setting at least one of the reproduction patterns as a reference pattern, and sets at least one pattern other than the reference pattern as a comparison pattern;
means for comparing a signal of a portion corresponding to a fixed length pit included in the reference pattern and a signal of a portion corresponding to a fixed length pit included in the comparison pattern; and
means for detecting the amount of length deviation of a pit corresponding to the length of the variable-length land included in the comparison pattern based on the comparison result.

5. An optical information recording device for recording information on an optical recordable medium through pulse irradiation of laser light, comprising:
means for performing test recording on the optical recordable medium using a plurality of recording pulses including a recorded pattern in which a variable-length land, a fixed length pit and a fixed length land are consecutive and the length of the variable-length land is different;
means for obtaining a plurality of reproduction patterns corresponding to each of the recording pulses by reproducing the result of the test recording;
means for comparing a signal of a portion corresponding to a fixed length pit included in each of the reproduction patterns and a prescribed length of a pit corresponding to the length of the fixed length pit; and
means for detecting the amount of length deviation of a pit corresponding to the length of the fixed length pit based on the comparison result.

6. An optical information recording device for recording information on an optical recordable medium through pulse irradiation of laser light, comprising:
means for performing test recording on the optical recordable medium using a plurality of recording pulses including a recorded pattern in which a fixed length land, a variable-length pit and a fixed length land are consecutive and the length of the variable-length pits are different;
means for obtaining a plurality of reproduction patterns corresponding to each of the recording pulses by reproducing the result of the test recording;
means for comparing a signal of a portion corresponding to a variable-length pit included in each of the reproduction patterns and a prescribed length of a pit corresponding to the length of the variable-length pit; and
means for detecting the amount of length deviation of a pit corresponding to the length of the variable-length pit based on the comparison result.

7. An optical information recording device for recording information on an optical recordable medium through pulse irradiation of laser light, comprising:
means for performing test recording on the optical recordable medium using a predetermined strategy;
means for obtaining a binarization signal by reproducing the result of the test recording;
means for counting the pulse length of the binarization signal using a predetermined clock signal;
means for storing the count result in a predetermined storage area;
means for creating a histogram of the count result;
means for specifying the pit length and the land length included in the binarization signal using the histogram;
means for searching first and second reproduction patterns from the record area based on the specified pit length and land length; and
means for detecting deviation between the strategy and a recorded pattern formed by the test recording, by comparing the first and second reproduction patterns obtained through the search.

8. An optical information recording device for recording information on an optical recordable medium through pulse irradiation of laser light, comprising:
means for performing test recording on the optical recordable medium using a predetermined strategy;
means for obtaining a binarization signal by reproducing the result of the test recording;
means for counting the pulse length of the binarization signal using a predetermined clock signal;
means for storing the count result in a predetermined storage area;
means for writing a histogram of the count result; and
means for specifying the pit length and the land length included in the binarization signal using the histogram.

9. The optical information recording device according to Claim 8, further comprising:
means for searching the first and second reproduction patterns from the record area based on the specified pit length and land length.

10. The optical information recording device according to Claim 8, further comprising:
means for detecting deviation between the strategy and a recorded pattern formed by the test recording, by comparing the first and second reproduction patterns obtained through the search.

11. An optical information recording method of recording information on an optical recordable medium through pulse irradiation of laser light, comprising:
a step of performing test recording on the optical recordable medium using a predetermined strategy;
a step of comparing first and second reproduction patterns that are obtained by reproducing the test recording result; and
a step of detecting deviation between the strategy and a recorded pattern formed by the test recording,
wherein the detecting deviation is performed by using the comparison result.
